# EUROPÄISCHE PATENTSCHRIFT

(11) **EP 1 983 210 B1**
(45) Veröffentlichungstag und Bekanntmachung des Hinweises auf die Patenterteilung: **31.08.2011**
(21) Anmeldenummer: 08000919.4
(22) Anmeldetag: 18.01.2008
(51) Int. Cl.: F16D 65/12

(54) **Verbund-Bremsscheibe für eine Fahrzeug-Scheibenbremse**
Compound brake disc for a vehicle disc brake
Disque de frein composite pour un frein à disque de véhicule

(30) Priorität: 20.04.2007 DE 102007018655
(43) Veröffentlichungstag der Anmeldung: 22.10.2008
(73) Patentinhaber: AUDI AKTIENGESELLSCHAFT, 85045 Ingolstadt (DE)
(72) Erfinder: Saame, Christoph, 85080 Gaimersheim (DE); Yazdirad, Kamjar, 85049 Ingolstadt (DE)
(74) Vertreter: Asch, Konrad

(56) Entgegenhaltungen:
- EP-A1- 0 198 217
- EP-A1- 1 091 137
- US-A- 5 823 303

## Beschreibung

Die Erfindung betrifft eine Verbund-Bremsscheibe für eine Fahrzeug-Scheibenbremse nach dem Oberbegriff des Patentanspruches 1.

Bekanntermaßen weisen Verbund-Bremsscheiben jeweils einen Reibring und als Reibringhalter einen Bremsscheibentopf auf. Dabei kann der Bremsscheibentopf und der Reibring unabhängig voneinander in Hinblick auf ihre jeweilige Funktion optimiert werden.

Aus der DE 100 32 972 B4 ist eine gattungsgemäße Verbund-Bremsscheibe für eine Fahrzeug-Scheibenbremse bekannt die einen Reibring und einen Bremsscheibentopf aufweist. Der Reibring weist radial innen einen Axial-Fortsatz auf, der über zumindest einen Haltebolzen mit dem Bremsscheibentopf-Mantel verbunden ist. Der Haltebolzen kann als Schraube ausgebildet sein, die im wesentlichen senkrecht zur Scheibenbremsen-Achse, d. h. in Radialrichtung, ausgerichtet ist. Die Schraube ist durch einander zugewandte, gegenüberliegende Ausnehmungen, d. h. Bohrungen oder Durchbrüche, des Reibring-Fortsatzes und des Bremsscheibentopf-Mantels geführt.

Bei Wärmebelastung kommt es bekanntermaßen zu einer thermischen Reibringdehnung radial nach außen, wodurch mechanische Spannungen zwischen dem Reibring und dem Bremsscheibentopf entstehen. Zur Reduzierung dieser mechanischen Spannungen sind im gattungsgemäßen Stand der Technik der Reibring und der Bremsscheibentopf jeweils über elastische Abschnitte, z. B. den Reibring-Fortsatz, miteinander verbunden, durch die die Schraube geführt ist. Diese Elastizität des Bremsscheibentopfes und des Reibringes ist einer im wesentlichen ungehinderten thermischen Reibringdehnung förderlich, so dass unerwünschte Reibringverformungen reduziert sind.

Zur Ausbildung der elastischen Abschnitte sind fertigungstechnisch aufwendig am Mantel des Bremsscheibentopfes zusätzliche Durchbrüche ausgebildet und ist der Mantel teilweise mit reduzierter Wandstärke ausgebildet. Demgegenüber ist der Reibring fertigungstechnisch aufwendig mit dem angeformten elastischen Fortsatz ausgebildet.

Aus der DE 103 22 454 ist eine weitere Verbundbremsscheibe bekannt, bei der jedoch im Gegensatz zur Erfindung keine zerstörungsfrei lösbare Verbindung zwischen dem Reibring und dem Reibringträger vorhanden ist. Vielmehr erfolgt die Verbindung zwischen dem Reibring und dem Reibringträger durch Ausprägungen, die während eines Prägevorgangs aus der Umfangsfläche Reibringhalters hervorstehen und in zugeordnete Öffnungen des Reibringes eingreifen.

Die 0 198 217 offenbart eine Verbund-Bremsscheibe gemäß dem Oberbegriff des Anspruchs 1.

Die Aufgabe der Erfindung besteht darin, eine Verbund-Bremsscheibe für eine Scheibenbremse eines Fahrzeugs bereitzustellen, bei der in konstruktiv einfacher Weise eine lösbare Verbindung zwischen dem Reibring und dem Bremsscheibentopf bei reduzierten thermischen Spannungen bereitgestellt ist.

Die Aufgabe der Erfindung ist durch die Merkmale des Patentanspruches 1 gelöst. Vorteilhafte Weiterbildungen der Erfindung sind in den jeweiligen Unteransprüchen offenbart.

Zusätzlich kann der Haltebolzen in einer gegenüberliegenden zweiten Ausnehmung in Axial- und Radialrichtung spielfrei gehaltert sein. Dadurch ist der Haltebolzen zuverlässig in der Verbund-Bremsscheibe gesichert.

Zur Realisierung der erfinderischen Idee kann der Haltebolzen einen ersten Bolzenabschnitt aufweisen, der mit radialem Bewegungsspiel formschlüssig in der ersten Ausnehmung geführt ist. Die Erfindung ist sowohl bei innenbelüfteten Bremsscheiben als auch bei massiven Bremsscheiben anwendbar.

Demgegenüber kann der Haltebolzen mit einem zweiten Bolzenabschnitt in einer, der ersten Ausnehmung gegenüberliegenden zweiten Ausnehmung spielfrei gehalten sein, um den Haltebolzen zuverlässig im Reibring und im Reibringhalter zu sichern.

Bevorzugt kann der Haltebolzen in der ersten der beiden gegenüberliegenden Ausnehmungen radial verschiebbar gelagert sein, und in der zweiten der beiden Ausnehmungen spielfrei gelagert sein. Hierzu kann der Haltebolzen einen ersten und einen zweiten Bolzenabschnitt aufweisen. Mit seinem ersten Bolzenabschnitt kann der Haltebolzen mit radialem Bewegungsspiel in der ersten Ausnehmung geführt sein. Demgegenüber kann der Haltebolzen mit seinem zweiten Bolzenabschnitt in der zweiten Ausnehmung lösbar, vorzugsweise in Schraubverbindung, und spielfrei gelagert sein. Im Falle einer Schraubverbindung kann der zweite Bolzenabschnitt des Haltebolzens einen Gewindeabschnitt aufweisen, der in ein entsprechendes Innengewinde der Ausnehmung geschraubt ist. Die zweite Ausnehmung kann demgegenüber eine Sackloch-Bohrung im Reibring sein, in der der Haltebolzen radial verschiebbar geführt ist.

Der Schraubbolzen kann axial benachbart zum Schraubenkopf einen Gewindeabschnitt aufweisen, an dem sich ein Führungsabschnitt anschließt, der in der zugehörigen Sackloch-Bohrung des Reibrings radial verschiebbar gelagert ist.

Nachfolgend sind zwei Ausführungsbeispiele der Erfindung anhand der beigefügten Figuren beschrieben.

Es zeigen:
- Fig. 1: in einer Seitenhalbschnittdarstellung eine Verbund-Bremsscheibe gemäß dem ersten Ausführungsbeispiel;
- Fig. 2 und 3: jeweils vergrößerte Teilschnittansichten der in der Fig. 1 gezeigten Verbund-Bremsscheibe; und
- Fig. 4 und 5: jeweils grob schematisch Halbschnitt-Darstellungen von innenbelüfteten Bremsscheiben gemäß dem zweiten Ausführungsbeispiel.

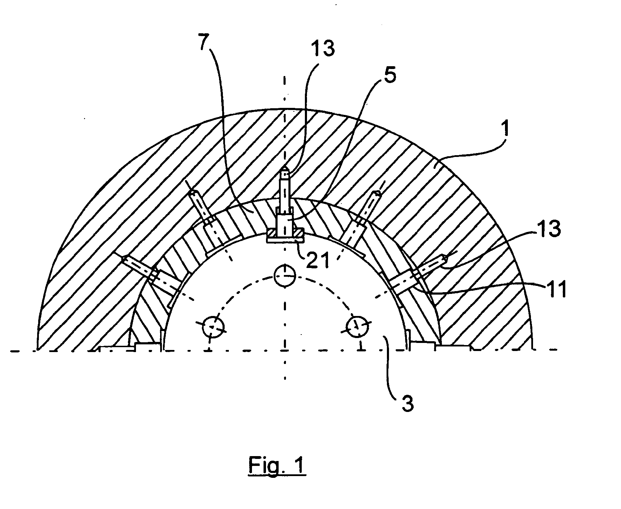

In der **Fig. 1** ist eine Verbund-Bremsscheibe mit einem radial äußeren Reibring 1 und einem Bremsscheibentopf 3 als Reibringhalter gezeigt. Der Reibring 1 und der Bremsscheibentopf 3 sind über eine Reihe von sich in Umfangsrichtung erstreckenden, radial ausgerichteten Schraubbolzen 5 zerstörungsfrei lösbar miteinander verbunden.

Durch die zweiteilige Gestaltung der Verbund-Bremsscheibe kann der Reibring 1 und der Bremsscheibentopf 3 variabel ausgeführt werden, z. B. mit unterschiedlichen Materialien. Damit ist eine kostengünstige Gewichtsoptimierung ermöglicht. Ebenso kann der Reibring 1 als Verschleißteil vom Bremsscheibentopf 3 gelöst werden, ohne den Bremsscheibentopf 3 selbst zu lösen.

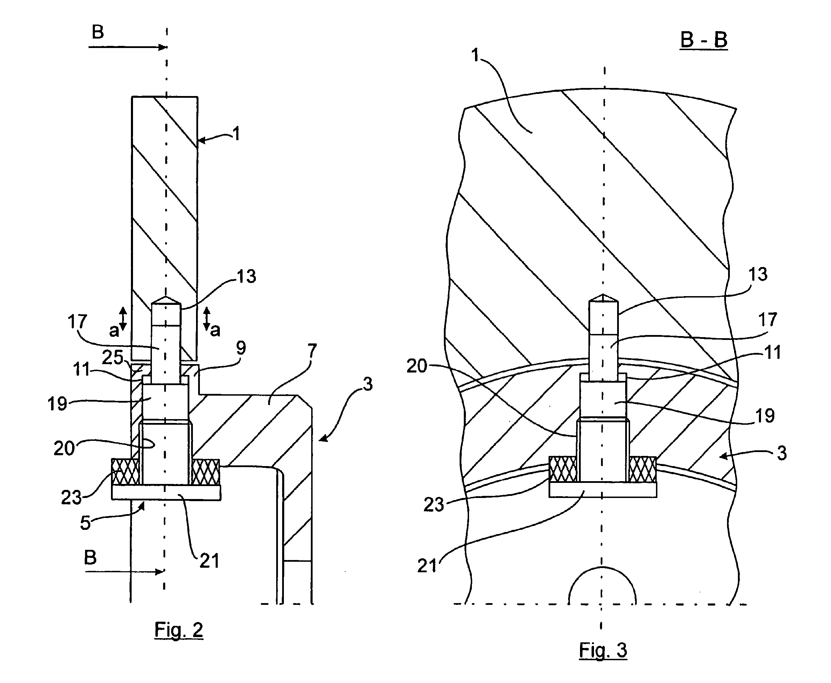

In den **Fig. 2 und 3** ist die zerstörungsfrei lösbare Verbindung des Bremsscheibentopfes 3 mit dem Reibring 1 in vergrößerter Teilschnittansicht gezeigt. Demzufolge ist der Bremsscheibentopf 3 am freien Ende seines Mantels 7 mit einem äußeren umlaufenden Ringbund 9 ausgebildet, der mit einem Radial-Durchbruch 11 versehen ist. Der Durchbruch 11 ist mit einer gegenüberliegenden Sackloch-Bohrung 13 des Reibrings 1 ausgerichtet. Zur radialen Verbindung des Bremsscheibentopfes 3 mit dem Reibring 1 ist gemäß den Figuren der Schraubbolzen 5 radial durch den Durchbruch 11 des Topf-Mantels 7 in die Bohrung 13 des Reibrings 1 geführt. Wie aus der **Fig. 1** hervorgeht, ist lediglich ein vertikal nach oben ausgerichteter Schraubbolzen 5 in der Bremsscheibe verschraubt. Die weiteren, zueinander ausgerichteten Bohrungen 13 und Durchbrüche 11 sind dagegen ohne Schraubbolzen gezeigt.

Der Schraubbolzen 5 ist gemäß den **Fig. 2 und 3** mit seinem endseitigen ersten Bolzenabschnitt 17 mit radialem Bewegungsspiel a formschlüssig verschiebbar in der Bohrung 13 des Reibrings 1 in einer geeigneten Passung, etwa eine Lospassung, geführt. Dadurch ist gewährleistet, dass der beim Bremsvorgang auf Scherung beanspruchte Schraubbolzen 5 zuverlässig Umfangskräfte von dem Reibring 1 auf den Bremsscheibentopf 3 überträgt.

Der Schraubbolzen 5 weist einen weiteren, zweiten Bolzenabschnitt 19 auf, der teilweise mit einem Gewinde 20 versehen ist, das mit dem Innengewinde des Durchbruchs 11 verschraubt ist. Der Schraubbolzen 5 wird daher beim Zusammenbau der Bremsscheibe ausgehend von der Mantelinnenseite des Bremsscheibentopfes 3 in den Durchbruch 11 eingeschraubt, bis sich dessen Schraubenkopf 21 über eine Hülse 23 mantelinnenseitig abstützt. Die Hülse 23 kann aus Gründen der Längenanpassung bzw. Verliersicherung des Schraubbolzens 5 vorgesehen sein.

Nach erfolgter Montage ist daher der Schraubbolzen 5 mit seinem Gewindeabschnitt 19 spielfrei im Durchbruch 11 des Bremsscheibentopfes 3 gehaltert und zuverlässig gesichert. Demgegenüber ist der erste Bolzenabschnitt 17 als Führungsabschnitt des Schraubbolzens 5 mit dem radialen Bewegungsspiel a in der Sackloch-Bohrung 13 geführt.

Wie den Figuren zu entnehmen ist, ist der Durchbruch 11 beginnend von der Mantelinnenseite des Topfes 3 mit einem großen Durchmesserabschnitt versehen, in dem der zweite Bolzenabschnitt 19 des Schraubbolzens 5 aufgenommen ist. An den großen Durchmesserabschnitt schließt sich in Radialrichtung ein Mündungsabschnitt 25 kleineren Durchmessers an. Durch den Mündungsabschnitt 25 des Bremsscheibentopf-Mantels 7 ist formschlüssig der erste Bolzenabschnitt 17 in die Sackloch-Bohrung 13 des Reibrings 1 geführt. Die Durchmesser des Mündungsabschnitts 25 und der Sackloch-Bohrung 13 sind gemäß den **Figuren 2 und 3** identisch. Der Mündungsabschnitt 25 des Durchbruchs 11 dient somit als Einführhilfe beim Zusammenbau der Bremsscheibe. Außerdem stützt der Mündungsabschnitt 25 den Schraubbolzen 5 in Umfangsrichtung zusätzlich ab, wodurch eine stabilere Bolzenverbindung erreicht ist.

Während des Bremsbetriebs ist der Reibring 1 hohen thermischen Belastungen unterworfen, so dass sich dieser gegenüber dem Bremsscheibentopf 3 in Radialrichtung ausdehnt. Bei einer solchen radialen Reibringdehnung kann sich der Reibring 1 gegenüber dem Führungsabschnitt 17 des Schraubbolzens 5 über das Bewegungsspiel a frei in Radialrichtung bewegen, ohne dass mechanische Spannungen zwischen dem Reibring 1 und dem Bremsscheibentopf 3 aufgebaut werden. Dadurch sind wärmebedingte Verformungen des Reibrings 1 weitgehend verhindert.

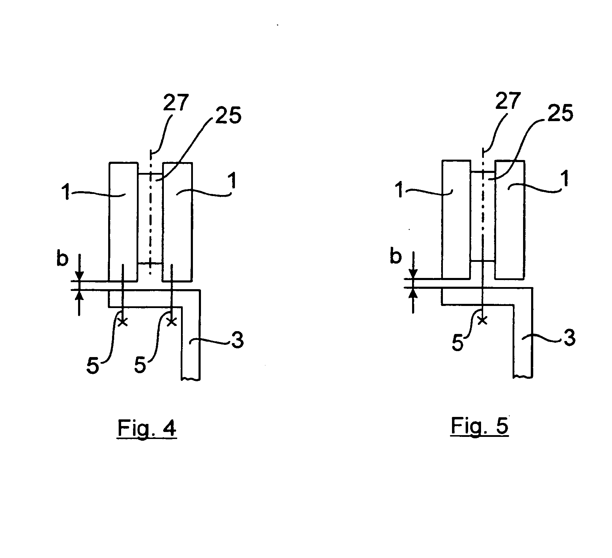

Anstelle der in den **Figuren 1 bis 3** gezeigten Bremsscheibe mit massivem Reibring 1 ist die Erfindung auch auf innenbelüftete Bremsscheiben anwendbar, wie sie grob schematisch im Halbschnitt in den **Figuren 4 und 5** angedeutet sind. So weist die innenbelüftete Bremsscheibe gemäß der **Fig. 4** zwei axial gegenüberliegende Reibringe 1 auf, die hier beispielhaft über Kühlrippen 25 miteinander einstückig und materialeinheitlich verbunden sind. Die Kühlrippen 25, von denen in den **Figuren 4 und 5** nur eine gezeigt ist, können sich umfangsseitig voneinander beabstandet in Radialrichtung beispielsweise senkrecht zur Bremsscheiben-Mittelachse erstrecken. Gemäß den **Figuren 4 und 5** sind die Reibringe 1 über einen Ringspalt b von einer Topf-Seitenwand des Bremsscheibentopfes 3 radial beabstandet, durch den eine Luftströmung in die Kühlkanäle zwischen den Kühlrippen 25 geführt werden kann.

Die in den **Fig. 4 und 5** nur angedeutete Schraubbolzen-Verbindung zwischen dem Bremsscheibentopf 3 und den Reibringen 1 ist identisch mit den in den **Figuren 1 bis 3** dargestellten Schraubbolzen-Verbindungen, so dass in den **Fig. 4 und 5** die Schraubbolzen-Verbindungen lediglich stark vereinfacht gezeigt sind. Demzufolge sind gemäß der **Fig. 4** die beiden Reibringe 1 über zwei in Axialrichtung voneinander beabstandete Schraubbolzen 5 mit der Seitenwand 7 des Bremsscheibentopfes 3 verschraubt. Die Schraubbolzen 5 sind dabei - analog zu den **Fig. 1 bis 3** - mit einem Innengewinde der topfseitigen Durchbrüche verschraubt und mit einem Führungsabschnitt 17 in einer Sacklochbohrung 13 des jeweiligen Reibrings 1 über das Bewegungsspiel a geführt.

Die beiden, in der **Fig. 4** gezeigten Schraubbolzen 5 sind dabei symmetrisch zu einer sich radial erstreckenden Symmetrieachse 27 angeordnet. Durch diese symmetrische Schraubbolzen-Anordnung ist eine gleichmäßige wärmebedingte Reibring-Ausdehnung gewährleistet, ohne dass sich die Reibringe 1 in Axialrichtung schirmen, d. h. deformieren. Damit die Anbindung der Reibringe 1 an dem Bremsscheibentopf 3 nicht überbestimmt ist, kann es vorteilhaft sein, die Haltebolzen 5 in Bremsscheiben-Umfangsrichtung abwechselnd mit dem in der **Fig. 4** linken Reibring 1 und mit dem in der **Fig. 4** rechten Reibring 1 zu verschrauben. Alternativ können zur Vermeidung einer solchen Überbestimmung die Haltebolzen 5 in Bremsscheiben-Umfangsrichtung ausnahmslos den in der **Fig. 4** linken Reibring 1 oder den in der **Fig. 4** rechten Reibring 1 mit dem Bremsscheibentopf 3 verbinden, während der axial gegenüberliegende Reibring 1 ohne direkte Anbindung an den Bremsscheibentopf 3 verbleibt.

Im Unterschied zur **Fig. 4** ist in der **Fig. 5** der Schraubbolzen 5 zentrisch zur Symmetrieachse 27 ausgebildet, wodurch ebenfalls eine insgesamt symmetrische Schraubbolzen-Verbindung zwischen dem Bremsscheibentopf 3 und den Reibringen 1 realisiert ist. Der Haltebolzen 5 ist dabei im Unterschied zu der **Fig. 4** nicht mit den benachbarten Reibringen 1 in Verbindung, sondern vielmehr mit der Kühlrippe 25. Hierzu ist die Kühlrippe 25 entsprechend materialstärker zu gestalten, ohne jedoch die Funktion der Kühlkanäle zu beeinträchtigen.

Alternativ zu den in den **Fig. 4 und 5** gezeigten innenbelüfteten Bremsscheiben sollen von der Erfindung jedoch auch innenbelüftete Bremsscheiben umfasst sein, deren Reibringe nicht symmetrisch mit den Bremsscheibentöpfen verschraubt sind.

## Patentansprüche

1. Verbund-Bremsscheibe für eine Scheibenbremse eines Fahrzeugs, mit einem Reibring (1) und einem Reibringhalter (3), die über zumindest einen, sich im wesentlichen radial erstreckenden, zerstörungsfrei lösbaren Haltebolzen (5) miteinander verbunden sind, der in gegenüberliegenden, zueinander ausgerichteten Ausnehmungen (11, 13) des Reibrings (1) und des Reibringhalters (3) eingesetzt ist, wobei der Haltebolzen (5) in einer Ausnehmung (13) des Reibrings (1) in Radialrichtung verschiebbar gelagert ist, und die Ausnehmung (11) ein Durchbruch in einem umlaufenden Mantel (7) des Reibringhalters (3) ist, welcher Durchbruch (11) ein Innengewinde (19) aufweist, **dadurch gekennzeichnet, dass** der Haltebolzen (5) ein Schraubbolzen ist, dessen Schraubenkopf (21) mantelinnenseitig abgestützt ist.

2. Verbund-Bremsscheibe nach Anspruch 1, **dadurch gekennzeichnet, dass** der Haltebolzen (5) in der Ausnehmung (11) des Reibringhalters (3) spielfrei gehaltert ist.

3. Verbund-Bremsscheibe nach einem der Ansprüche 1 oder 2, **dadurch gekennzeichnet, dass** der Haltebolzen (5) einen ersten Bolzenabschnitt (17) aufweist, der mit radialem Bewegungsspiel (a) in der Ausnehmung (13) des Reibringes (1) formschlüssig geführt ist.

4. Verbund-Bremsscheibe nach Anspruch 3, **dadurch gekennzeichnet, dass** der Haltebolzen (5) einen zweiten Bolzenabschnitt (19) aufweist, der in der Ausnehmung (11) des Reibringhalters (3) lösbar in Schraubverbindung, und in Axial- und Radialrichtung spielfrei gehalten ist.

5. Verbund-Bremsscheibe nach einem der vorhergehenden Ansprüche, **dadurch gekennzeichnet, dass** die Ausnehmung (13) des Reibringes (1) eine Sackloch-Bohrung im Reibring (1) ist, in der der Haltebolzen (5) radial verschiebbar geführt ist.

6. Verbund-Bremsscheibe nach einem der Ansprüche 1 bis 5, **dadurch gekennzeichnet, dass** der Mantel (7) des Reibringhalters (3) im Bereich des Durchbruchs (11) materialverstärkt ist.

7. Verbund-Bremsscheibe nach einem der Ansprüche 3 bis 6, **dadurch gekennzeichnet, dass** die Ausnehmung (11) des Reibringhalters (3) einen Mündungsabschnitt (25) aufweist, durch den der erste Bolzenabschnitt (17) in die erste Ausnehmung (13) des Reibringes (1) geführt ist.

8. Verbund-Bremsscheibe nach Anspruch 7, **dadurch gekennzeichnet, dass** die Durchmesser des Mündungsabschnitts (25) der Ausnehmung (11) des Reibringhalters (3) und der Ausnehmung (13) des Reibringes (1) im Wesentlichen gleich groß sind.

## Claims

1. Compound brake disc for a vehicle disc brake, with a friction ring (1) and a friction ring holder (3) which are connected to each other via at least one retaining bolt (5) which extends substantially radially, can be released without being destroyed and is inserted into opposite, mutually aligned recesses (11, 13) of the friction ring (1) and of the friction ring holder (3), wherein the retaining bolt (5) is mounted displaceably in the radial direction in a recess (13) of the friction ring (1), and the recess (11) is an aperture in an encircling casing (7) of the friction ring holder (3), which aperture (11) has an internal thread (19), **characterized in that** the retaining bolt (5) is a screw bolt, the screw head (21) of which is supported on the inside of the casing.

2. Compound brake disc according to Claim 1, **characterized in that** the retaining bolt (5) is secured in a play-free manner in the recess (11) of the friction ring holder (3).

3. Compound brake disc according to either of Claims 1 and 2, **characterized in that** the retaining bolt (5) has a first bolt portion (17) which is guided in a form-fitting manner with a radial movement clearance (a) in the recess (13) of the friction ring (1).

4. Compound brake disc according to Claim 3, **characterized in that** the retaining bolt (5) has a second bolt portion (19) which is held releasably in a screw connection in the recess (11) of the friction ring holder (3) and in a play-free manner in the axial and radial direction.

5. Compound brake disc according to one of the preceding claims, **characterized in that** the recess (13) of the friction ring (1) is a blind hole bore in the friction ring (1), in which blind hole bore the retaining bolt (5) is guided in a radially displaceable manner.

6. Compound brake disc according to one of Claims 1 to 5, **characterized in that** the casing (7) of the friction ring holder (3) is materially reinforced in the region of the aperture (11).

7. Compound brake disc according to one of Claims 3 to 6, **characterized in that** the recess (11) of the friction ring holder (3) has a mouth portion (25) through which the first bolt portion (17) is guided into the first recess (13) of the friction ring (1).

8. Compound brake disc according to Claim 7, **characterized in that** the diameters of the mouth portion (25) of the recess (11) of the friction ring holder (3) and of the recess (13) of the friction ring (1) are substantially identical in size.

## Revendications

1. Disque de frein composite pour un frein à disque de véhicule, avec un anneau de friction (1) et un support d'anneau de friction (3), qui sont assemblés l'un à l'autre au moyen d'au moins un boulon de retenue (5) démontable sans destruction et s'étendant essentiellement en direction radiale, qui est introduit dans des évidements opposés (11, 13), alignés l'un avec l'autre, de l'anneau de friction (1) et du support d'anneau de friction (3), dans lequel le boulon de retenue (5) est supporté de façon coulissante en direction radiale dans un évidement (13) de l'anneau de friction (1), et l'évidement (11) est un perçage dans une enveloppe périphérique (7) du support d'anneau de friction (3), perçage (11) qui présente un filet intérieur (19), **caractérisé en ce que** le boulon de retenue (5) est un boulon fileté, dont la tête de vis (21) est appuyée sur le côté intérieur de l'enveloppe.

2. Disque de frein composite selon la revendication 1, **caractérisé en ce que** le boulon de retenue (5) est supporté sans jeu dans l'évidement (11) du support d'anneau de friction (3).

3. Disque de frein composite selon l'une quelconque des revendications 1 ou 2, **caractérisé en ce que** le boulon de retenue (5) présente une première partie de boulon (17), qui est guidée en complémentarité de forme avec un jeu de mobilité radial (a) dans l'évidement (13) de l'anneau de friction (1).

4. Disque de frein composite selon la revendication 3, **caractérisé en ce que** le boulon de retenue (5) présente une deuxième partie de boulon (19), qui est maintenue sans jeu en direction axiale et radiale, en liaison vissée de façon démontable dans l'évidement (11) du support d'anneau de friction (3).

5. Disque de frein composite selon l'une quelconque des revendications précédentes, **caractérisé en ce que** l'évidement (13) de l'anneau de friction (1) est un trou borgne foré dans l'anneau de friction (1), dans lequel le boulon de retenue (5) est guidé de façon déplaçable en direction radiale.

6. Disque de frein composite selon l'une quelconque des revendications 1 à 5, **caractérisé en ce que** l'enveloppe (7) du support d'anneau de friction (3) est matériellement renforcée dans la région du perçage (11).

7. Disque de frein composite selon l'une quelconque des revendications 3 à 6, **caractérisé en ce que** l'évidement (11) du support d'anneau de friction (3) présente une partie d'ouverture (25), à travers laquelle la première partie de boulon (17) est menée dans le premier évidement (13) de l'anneau de friction (1) .

8. Disque de frein composite selon la revendication 7, **caractérisé en ce que** les diamètres de la partie d'ouverture (25) de l'évidement (11) du support d'anneau de friction (3) et de l'évidement (13) de l'anneau de friction (1) sont de grandeur essentiellement égale.
